# EUROPEAN PATENT SPECIFICATION

(11) **EP 2 218 532 B1**
(45) Date of publication and mention of the grant of the patent: **30.10.2013**
(21) Application number: 09153051.9
(22) Date of filing: 17.02.2009
(51) Int. Cl.: B23D 57/00

(54) **Wire saw device and method for operating same**
Drahtsäge und Bedienungsverfahren dafür
Dispositif de machine à scier à fil et son procédé de fonctionnement

(43) Date of publication of application: 18.08.2010
(73) Proprietor: Applied Materials, Inc., Santa Clara, CA 95054 (US)
(72) Inventor: Nasch, Philippe, 1052 Le Mont-sur-Lausanne (CH); Mottas, Philippe, 1694 Villarsiviriaux (CH); Rotundo, Daniel, 1815 Clarens (CH)
(74) Representative: Zimmermann & Partner

(56) References cited:
- CH-A5- 693 132
- US-A- 1 140 924
- US-A- 5 944 007
- US-A1- 2004 118 965

## Description

### FIELD OF THE INVENTION

The present invention relates to a wire saw device and a method for operating such a wire saw device. More particularly, the invention relates to a wire saw device for cutting or sawing hard materials such as blocks of silicon or quartz, e.g., for cutting silicon wafers, for a squarer, for a cropper or the like.

### BACKGROUND OF THE INVENTION

There exist wire saw devices for cutting blocks or bricks, thin slices, e.g. semiconductor wafers, from a piece of hard material such as silicon. In such devices a stretched wire is fed from a spool and is both guided and tensioned by wire guide cylinders. The wire that is used for sawing is generally provided with an abrasive material. As one option, the abrasive material can be provided as a slurry. This may be done shortly before the wire touches the material to be cut. Thereby, the abrasive is carried to the cutting position by the wire for cutting the material. As another option, the abrasive can be provided on the wire with a coating. For example, diamond particles can be provided on a metal wire with a coating, wherein the diamond particles are imbedded in the coating of the wire. Thereby, the abrasive is firmly connected with the wire.

US 2004/0118965 provides a follower apparatus for use in guiding material between the follower and a spool. The follower apparatus is mounted on a track running parallel to an axis of rotation of the spool. The apparatus has a follower module, a base with a roller rotatably mounted thereon and having an axis of rotation parallel to the rotational axis of the spool. The roller provides support and guidance to the material being wound. A pulley is rotatably mounted to receive material from the roller and redirect the direction of material traveled. Further, a detection apparatus for detecting when the material is not in a selected zone of the roller and for outputting a corresponding indicative signal is also provided. Light beams and the detection apparatus are positioned so as to detect material excursions to pre-determined off center portions of the roller. A motorized apparatus is part of the follower apparatus for moving the follower module. The follower apparatus also includes a control apparatus responsive to the signals detecting the material for directing said motorized apparatus to reposition the follower module into the selected zone, i.e. back on to a center zone of the roller. In one example of US 2004/0119865, the pulley is additionally mounted to a rotational member providing rotation of the pulley around an axis being perpendicular to the pulley axis. As the material moves into one of the side areas being beyond the center zone, the material causes the pulley to rotate about the axis perpendicular to the axis of the pulley to keep the pulley in line with the material direction. An encoder apparatus is incorporated to send a signal to the controller that is indicative of an angle of rotation of the rotational member. The controller responds to adjust the follower module position along a track so as to bring the material back to the center zone of the roller.

Generally, there is a tendency to use thinner wires in order to reduce the thickness of the cut and, thereby, to decrease the material wasted. Further, there is a desire to increase the cutting speed for improving the throughput of wire saw devices. The maximum speed for moving the piece through the web, and also the maximum effective cutting area within a given amount of time, is limited by several factors including wire speed, hardness of the material to be sawed, disturbing influences, desired precision, and the like.

During cutting the wire can be unwound from a spool having a predetermined length along the axial direction. During the unwinding process the position at which the wire leaves the spool varies along the axial direction as the wire is unwound layer by layer from the spool. The wire moves alternating from one side of the spool to the other side of the spool, i.e., flange to flange. This might result in unwanted effects like oscillations, twisting of the wire or the like.

Thus, there is a need for an improved unwinding of the wire from the spool and an improved wire saw device.

### SUMMARY

In view of the above, a wire management unit according to independent claim 1 and a method of tracking a wire position in a wire saw device according to independent claim 13 are provided. Further advantages, features, aspects and details are apparent from the dependent claims, the description and drawings.

According to one embodiment, a wire management unit adapted for a wire saw device having a wire forming a wire web for cutting is provided. The wire management unit includes a pulley moving device; at least one pulley for redirecting the wire and adapted for guiding the wire to the wire web, wherein the at least one pulley is connected to the pulley moving device and is adapted to rotate around a pulley axis; a spool for providing a wire towards the wire web during unwinding of the wire from the spool, wherein the spool includes a rotation axis and a wire carrying area with a length along the direction of the rotational axis; and wherein the pulley moving device is adapted to move the at least one pulley along the direction of the rotation axis.

According to another embodiment, a method of tracking a wire position in a wire saw device having a wire forming a wire web for cutting is provided. The method includes unwinding the wire from a spool having a rotation axis and a wire carrying area with a length along the direction of the rotational axis; and moving at least one pulley along the direction of the rotation axis.

Embodiments are also directed at apparatuses for carrying out the disclosed methods and including apparatus parts for performing each described method step. These method steps may be performed by way of hardware components, a computer programmed by appropriate software, by any combination of the two or in any other manner. Furthermore, embodiments according to the invention are also directed at methods by which the described apparatus operates. It includes method steps for carrying out every function of the apparatus.

### BRIEF DESCRIPTION OF THE DRAWINGS

So that the manner in which the above recited features of the present invention can be understood in detail, a more particular description of the invention, briefly summarized above, may be had by reference to embodiments. The accompanying drawings Fig. 33, 53 and 6A to 6C relate to embodiments of the invention and the other drawings relate to general embodiments, which may be equipped with features of the invention and are described in the following:

Fig. 1 shows a schematic view of a portion of a wire management unit showing wire being unwound from a spool over a roller;

Figs. 2A and 2B show schematic views of a portion of a wire management unit according to embodiments described herein;

Fig. 3A shows a schematic view of a further wire management unit according to embodiments described herein, wherein a first and a second electrode are provided for detecting the wire position;

Fig. 3B shows a schematic view of a further wire management unit according to embodiments described herein, and wherein an auto-align pulley is used for guiding the wire;

Fig. 4 show schematic views of another implementation of a portion of a wire management unit according to embodiments described herein;

Figs. 5A and 5B show schematic views of a yet even further wire management units according to embodiments described herein, wherein a first and a second electrode are provided for detecting the wire position and wherein auto-align pulleys are used for guiding the wire;

Figs. 6A to 6C show different schematic views of portions of a further wire management unit according to embodiments described herein;

Fig. 7 shows a schematic view of portions of a wire management unit according to embodiments described herein, wherein auto-align pulleys are connected for corresponding alignment; and

Fig. 8 shows a flow chart of a method of tracking the wire position according to embodiments described herein.

### DETAILED DESCRIPTION OF THE INVENTION

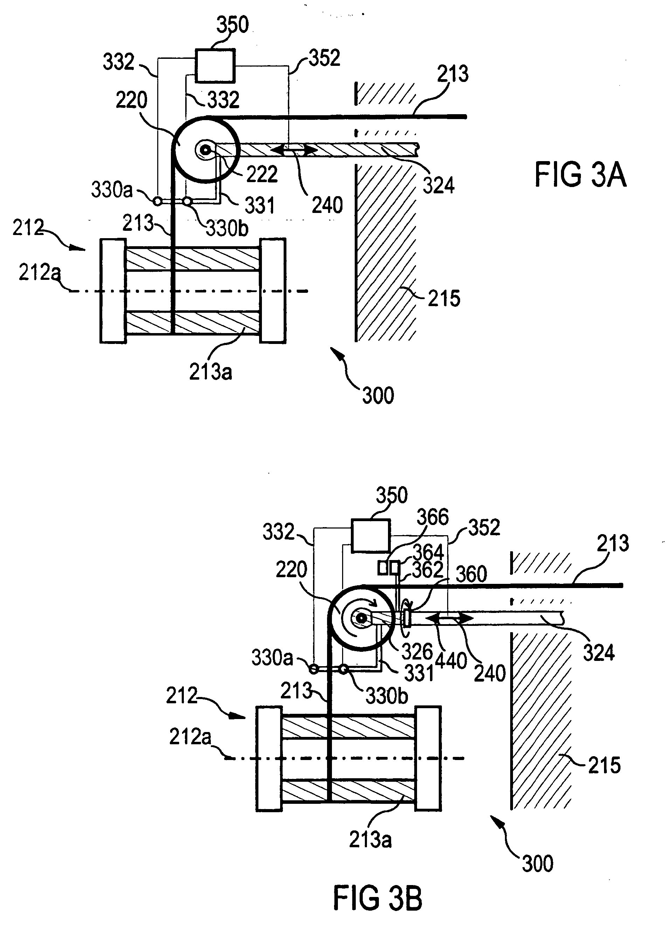

Reference will now be made in detail to the various embodiments of the invention, one or more examples of which are illustrated in the figures 3B, 5B and 6A to 6A. Within the following description of the drawings, the same reference numbers refer to same components. Generally, only the differences with respect to individual embodiments are described. Each example is provided by way of explanation of the invention and is not meant as a limitation of the invention. For example, features illustrated or described as part of one embodiment can be used on or in conjunction with other embodiments to yield yet a further embodiment. It is intended that the present invention includes such modifications and variations.

Furthermore, in the following description a wire management unit will be understood as a device handling the supply of wire to a working area of a wire saw device, such as a cropper, a squarer, or a wafer cutting wire saw. Typically, the wire management unit includes a wire guide for transporting and guiding the wire in a wire moving direction while the wire management unit provides control of the wire tension. Furthermore, the wire provided by the wire management unit forms a wire web as described above. In the following, a wire web will be considered as the web formed by a single wire management unit. It should be understood that a wire web may contain more than one working area which is defined as an area in which a sawing process is performed.

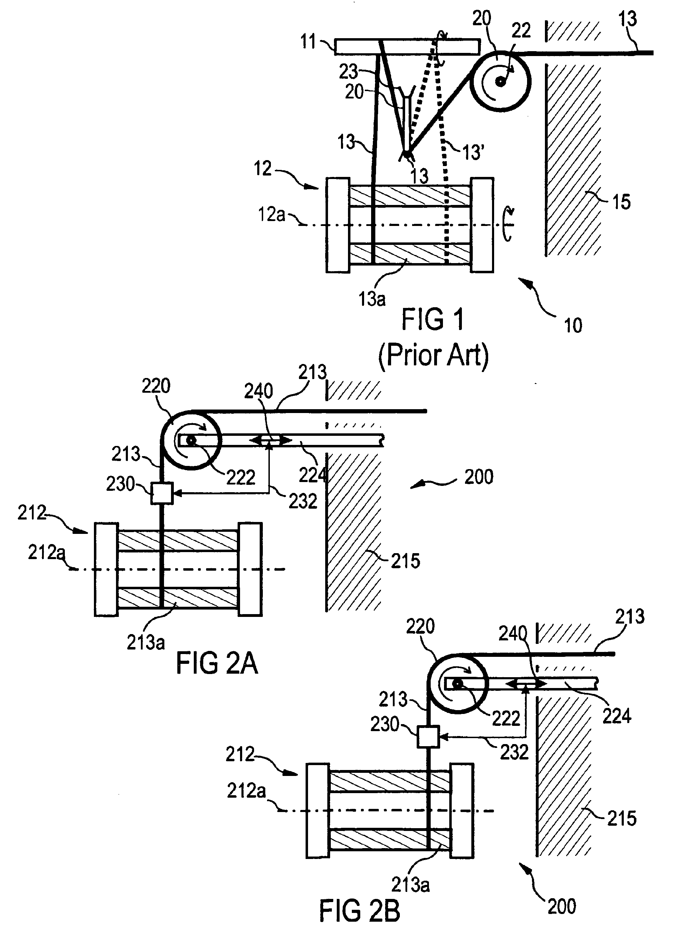

As shown in FIG. 1, within a wire saw device a wire 13 is provided from a spool 12. During sawing, the wire 13 is unwound from the spool 12. Thereby, the spool rotates around its axis 12a. FIG. 1 shows the wire 13 being carried on a spool, which is indicated by reference 13a. Within the wire saw device 10, the wire 13 is guided from the spool 12 over a roller 11 to pulleys 20, which rotate around the pulley axis 22. Generally, a plurality of pulleys 20 is provided to guide the wire 13 to a cutting area, in which a wire web is formed. Thereby, for example, the wire 13 is transported through a portion 15 of a housing of the wire saw device 10.

During unwinding of the wire from the spool 12, the position at which the wire 13 leaves the wire carrying area 13a moves along the axis 12a i.e., moves in direction parallel to the axis 12a. Thus, during a cutting process by means of wire saw, such as a multi-wire slurry saw, the machine unwinds new wire from a spool. As the spool unwinds, the wire moves alternately from one side of the spool to the other (flange to flange). This is indicated by the wire 13, 13' being unwound from the spool 12 at different positions, as indicated by the dotted lines showing a wire 13' at a different position than the wire 13.

For modern wire saw devices like croppers, squarers, or wire saws, there is the desire to cut the hard material such as semiconductor material, for example silicon, quartz, or the like at high speed. The wire speed, that is the speed of the wire moving through the wire saw device, the wire management unit and the material to be sawed, respectively, can be, for example, 10 m/s or higher. Typically, the wire speed can be in a range of 15 to 20 m/s. However, higher wire speeds of 25 m/s or 30 m/s can also be desirable and could be realized under certain conditions.

For unwinding the wire at the desired wire speed, the spool rotates with a rotation speed of up to several thousands rotations per minute. For example, 1000 to 2000 rpm can be provided for unwinding the wire. Accordingly, as indicated in FIG. 1, the different positions, at which the wire 13 leaves the spool 12, also vary at considerable speed and the angle under which the wire 13 enters the pulley 20 varies correspondingly. The angle between the wire at the spool and the entrance of the fixed pulley groove changes periodically. This variation generates vibration in the wire as it slides from one side of the pulley groove to the other. This variation can eventually even result in the wire climbing up the side walls of the groove. These vibrations are very detrimental to the process as they create a high risk of wire breakage, e.g. due to spike in tension within the wire as the wire accommodates the vibrations amplitudes and a movement up & down on the pulley groove side walls 23. The varying wire position on the spool 12 and, in particular, the varying angles under which the wire 13 enters the pulley 20 may result in oscillations in the wire saw device, which may deteriorate the cutting precision. Further, this may be particularly relevant as there is a desire for thinner wire diameters.

Accordingly, it is desired to improve the wire management unit such that oscillations of the wire itself, of components of the wire management unit, or of components of the wire saw device can be reduced. Further, the risk of wire breakage should be reduced. Furthermore, upon alarm stop of the wire saw device, the inertia of the free roller 11 may exceed the wire strength. This may systematically lead to wire breakage for thin wire having a diameter of, e.g., 120 µm or less.

According to one embodiment, which can be described with respect to FIGS. 2A and 2B, the wire saw device 200 is provided. Within the wire saw device, there is a wire management unit, some components of which are shown in FIGS. 2A and 2B.

According to different embodiments, a wire saw device can be a cropper, a squarer, a wire saw or a multiple wire saw. Thereby, a cropper is to be understood as a device, which can be used to saw end pieces from bricks or blocks, which have been separated into bricks in a squarer. A squarer generally, saws the silicon ingot into squares of the desired size such that a wire saw or a multiple wire saw can saw wafers from the bricks in a wafering process.

FIG. 2A and 2B show the spool 212 having a spool axis 212a. On the spool 212 wire is carried in a wire carrying area 213a. Generally, within a wire management unit, a plurality of pulleys can be provided. Typically, a pulley can have a groove adapted for guiding the wire. Further, a pulley generally can have one wire guiding position for guiding one wire in the pulley, i.e. in the pulley groove. One pulley 220 is shown in FIGS. 2A and 2B. Pulley 220 rotates around the pulley axis 220 and is connected to the wire saw device, for example a housing portion 215 of the wire saw device 200, by a support 224. Thereby, the support 224 can be provided by a rod, a beam or, other supporting means which carry the pulley 220 such that it can rotate around its axis 222.

According to embodiments, which are described herein, a pulley moving device 240 is provided. The pulley moving device is indicated by an arrow in FIGS. 2A and 2B, according to which the support 224 moves in the direction parallel to the spool axis 212a in a bi-directional mode. According to yet further embodiments, which can be combined with other embodiments described herein, other directions of movement might be superimposed with the above described movement for further corrections of the pulley position.

According to yet further embodiments, which can be combined with other embodiments described herein, a wire position detection device 230 can be provided. The wire position detection device detects the position along the spool axis 212a, at which the wire 213 leaves the spool 212 or the wire carrying area 213a, respectively. The wire position detection device 230 is connected to the pulley moving device 240 by connection 232. Thereby, for example, a signal receiving unit, a controller, a computer for calculating the correct pulley position, or the like can be provided within the connection between the wire position detection device and the pulley moving device.

As can be seen by FIGS. 2A and 2B, the pulley moving device 240 is adapted to move the pulley 220 and the wire position detection device along the axis 212a of the spool in order to position the pulley at the desired position over the spool 212.

According to different embodiments, which can be combined with other embodiments described herein, the pulley moving device 240 can be a linear actuator such as lineal motor, a pneumatic cylinder, a motor with a worm drive or the like such that the pulley moving device is capable of moving the pulley at least in a linear direction along the spool axis. Thereby, for example, the pulley can be moved by moving the support 224, which might be connected to a housing portion 215 of the wire saw device 200.

According to yet further embodiments, which can be combined with other embodiments described herein, a wire saw device 300 can be provided. Within the following description, only those portions, components, aspects and details will be described, which deviate from previous or other embodiments described herein. It is to be understood that components, aspects and details described with respect to other embodiments can as well be applied to those embodiments which do not describe all components, aspects or details.

FIG. 3 shows a wire saw device 300 having a spool 212 with a spool axis 212a, a housing portion 215 and a pulley moving device 240. A wire 213, which is carried on the spool 212 on a wire carrying area 213a is transferred from the spool in the direction of the pulley 220 having a pulley axis 222. The wire 213 is then guided by, for example one or more further pulleys to the wire web that is used for sawing the material. As shown in FIG. 3A, according to some embodiments, a support 324 can be provided such that the support is connected to the pulley axis 222. Further, according to yet further implementations, an electrode support 331 is connected to the support 324. The electrode support 331 carries the first electrode 330a and a second electrode 330b. According to some embodiments, which can be combined with other embodiments described herein, the electrons can be used as a wire position detection device.

The wire position detection device using a first electrode and a second electrode further including a connection 332 of the first electrode to the controller 350 and a connection 332 of the second electrode to the controller 350, respectively, to the control of 350. This wire position detection device is capable of detecting whether or not a wire that is charged to a predetermined potential, such as for example between and 10 and 50 V, touches the electrode. Accordingly if the wire contacts the first or the second electrode, a current can be detected in the controller 350. Thereby, the first electrode 330a and the second electrode 330b are spaced apart such that the wire is guided between the first electrode and the second electrode.

As can be understood with respect to FIG. 2A, if the pulley moving device is misaligned with respect to the correct position in direction of the spool axis 212a, the wire will be unwound from the spool 212 at an angle different from 90° with respect to the spool axis. Thereby, after a certain deviation from the correct position, the wire will touch one of the first and second electrodes. This contact will be detected and can be used for tracking the wire position along the spool.

According to different embodiments, which can be combined with other embodiments described herein, the length of the spool 212 in the direction of the rotation axis 212a or the lengths of the wire carrying area 213a in the direction of the spool rotation axis212a can be in a range of 200 mm to 500 mm. Generally, the wire is wound up on the spool with a given pitch. Typically the wire is wound on the spool such that neighboring wires in one layer have a distance of 0.2 mm to 0.8 mm, typically 0.5 mm. Accordingly, typical embodiments might have a positioning precision of the pulley moving device of 30 µm to 500 µm, typically 50 µm. FIG. 3A shows a wire position detection device having a first electrode 330a and the second electrode 330b, wherein the misalignment of the wire is detected when the wire touches the electrode. However, according to other embodiments, other wire position detection units can be used. For example, the wire position may be detected by a non-contact wire position detection unit. Thereby, according to different embodiments, a Hall-effect position detection sensor, an ultra-sound position detection sensor, an inductive position detection sensor, a capacitive position detection sensor or an optical position detection sensor, such as a laser sensor, may be used. These sensors may be used to either determine the position of the wire or as a proximity sensor such that the sensor provides a digital signal (yes/no) if the wire is in the vicinity of the sensor. Depending on the configuration, similar to the two electrodes described above, one of these sensors can, according to some embodiments, be provided on each side of the wire along the direction of the spool rotation axis.

Further embodiments will now be described with respect to FIG. 3B. In addition to the components described with respect to FIG. 3A, the pulley 220 in FIG. 3B is an automatically aligning pulley. Thereby, the support for supporting the pulley 220 has a first portion 324 and the second portion 326. Between the first portion and the second portion of the support a pulley adjusting rotation bearing 360 is provided. Thus, the pulley 220 can rotate around an axis which is perpendicular to the pulley rotation axis. As shown in FIG. 3B, the rotation axis of the pulley adjusting rotation bearing can, for example, be in the direction of the supporting rod carrying the pulley.

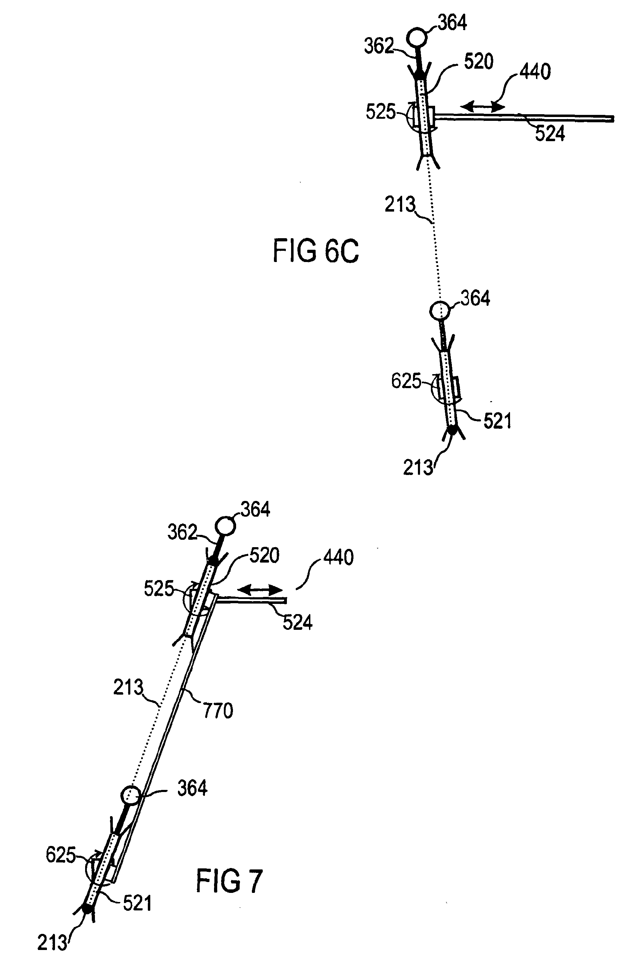

If the pulley 220 is provided as an auto-align pulley by providing a pulley adjusting rotation bearing 360 the pulley can automatically align in the event the wire 213 is not guided towards the pulley perpendicular to the pulley rotation axis. This can be better understood when referring to FIGS. 6C and 7, which will be described in more detail below.

FIG. 3B further shows the counter weight 364 supported by a counterweight support 362. According to some embodiments, which can be combined with other embodiments described herein, an auto-align pulley can be provided with a weight 364 such that the pulley is balanced with respect to the rotation axis of the pulley adjusting rotation bearing. Thus, the auto-align pulley can freely rotate around the axis of the pulley-adjusting-rotation-bearing such that gravity does not provide any force on the pulley towards a preferred rotation position.

Further implementations of an auto-align pulley can include a rotation break element or rotation prevention element 366 for preventing a rotation around the pulley adjusting rotation bearing axis. This rotation prevention element can be switched on or switched off, respectively, such that the auto-align pulley can be used in a fixed mode or in an auto-align mode. For example, the rotation prevention element can be an electromagnet which forces the counterweight 364 into a predetermined position such that the pulley cannot rotate around the axis of the bearing 360 anymore.

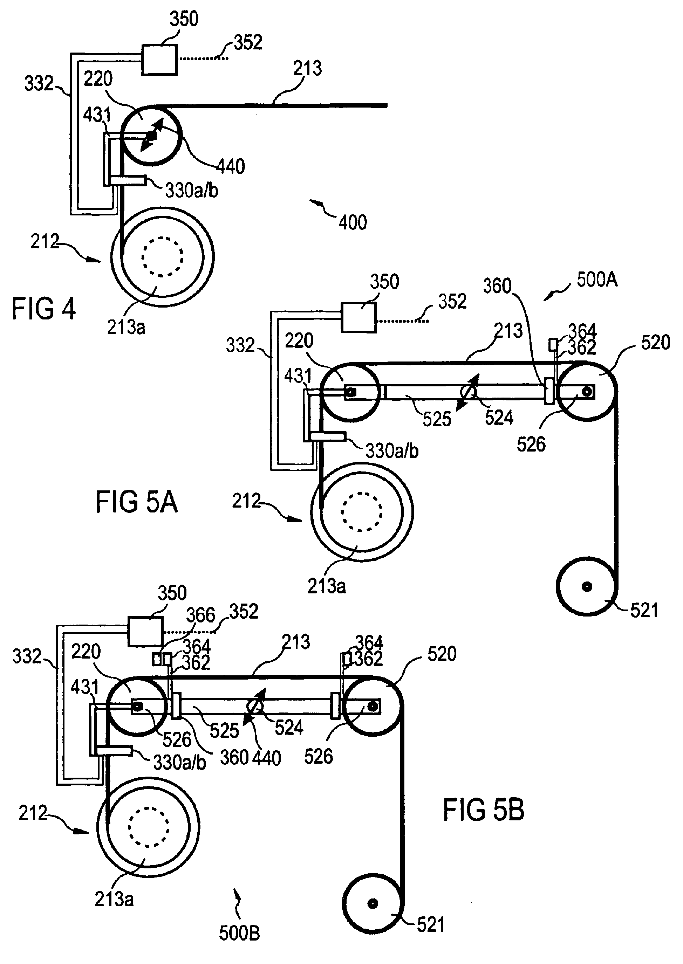

FIG. 4 shows a further embodiment, which is similar to the embodiment described with respect to FIG. 3A. Therein, the spool 212, the pulley 220, the pulley moving device 440, the electrode support 431 and the first and second electrode 338/B, respectively are provided in a different configuration, which can be seen from the different view shown in FIG. 4. As indicated by the arrow that is used to illustrate the pulley moving device 440, in FIG. 4 the pulley can move in a direction perpendicular to the image plane of that image of FIG. 4. Thus, the pulley moving device can move the pulley in a direction corresponding to the rotation axis of the spool 212 in a bi-directional mode. The electrode support 431 is shaped correspondingly to have- in the image plane - the first electrode 330a in front of the wire 213 and a second electrode 330b behind the wire 213. Again, the electrodes can be connected to the controller 350 by connections 332. The controller 350 is connected to the pulley moving device 440 by a connection 352.

According to an even further embodiment, a wire saw device 500A can be provided as shown in FIG. 5A. According to the embodiments, which can be described with respect to FIG. 5A, the first pulley 220 and a second pulley 520 are supported by a pulley support having a first support member 525, a second support member 524 and a third support member 526. For example, as illustrated in FIG. 5A, the second support member 524 can be elongated perpendicular to the image plane and is connected to the pulley moving device. Accordingly, the first support member 525, which supports the first pulley 220 and second pulley 520 can be moved with the pulley moving device in a direction perpendicular to the image plane of FIG. 5A, i.e. the direction of the rotation axis of the spool 212. As a further alternative for additional modification, the third support member 526 is connected to the first support member 525 with a bearing 360 such that the second pulley can be provided as an auto-align pulley. According to the embodiments described with respect to FIG. 5A, the pulley moving device moves the first pulley 220 and the second pulley 520 simultaneously.

Yet further modifications, which can yield further embodiments, can be described with respect to FIG. 5B. Therein, a wire saw device 500B is shown. Contrary to FIG. 5A not only the second pulley 520 is provided as an auto-align pulley, but also with the first pulley 220 is provided as an auto-align pulley. As shown in FIG. 5B, the first pulley 220 can be rotated around an axis perpendicular to the pulley axis by providing a bearing 360 between the first support member 525 and the yet further support member 526. Typically, if the first pulley 220, i.e. the pulley receiving the wire 213 from the spool 212, can automatically align by rotation around the axis of the bearing 360, a rotation stop member can be provided.
Thereby, the rotation for automatically aligning the first pulley 220 can be fixed by, for example, switching on an electromagnet provided as the rotation prevention member. This rotation prevention element 366 can, for example, be used when the wire is re-wound on the spool. Thus, if the wire should be re-wound back onto the spool 212, the first pulley 220 is not operated in an auto-align mode but in a fixed mode and the position on which the wire is wound on the spool 212 can be adjusted by moving the first pulley 220 (and the second pulley 520 in the case of FIGS. 5A and 5B) in the direction of the spool rotation axis by means of the pulley moving device 440.

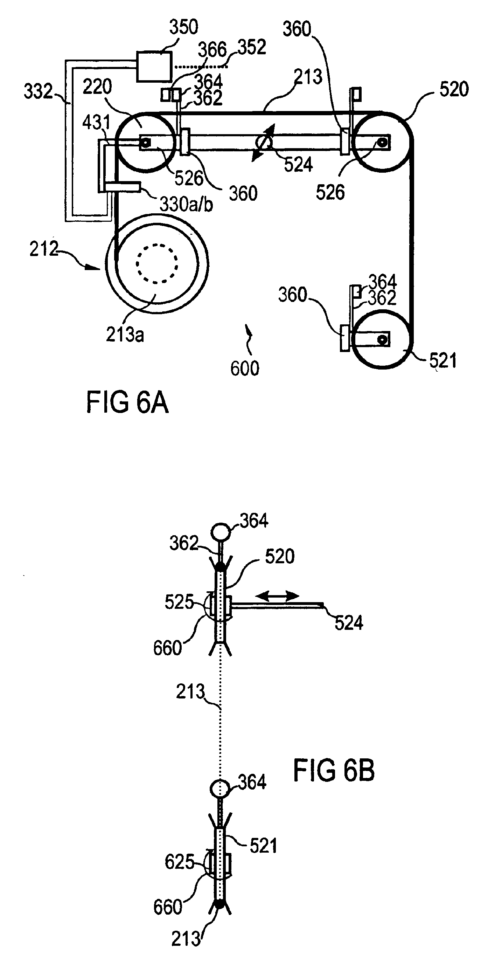

Further embodiments, which can be combined with other embodiments described herein, will now be described with respect to FIGS. 6A, 6B, 6C, and 7. As shown in FIG. 6A, additionally to having the first pulley 220 and the second pulley 520 being an auto-align pulley, a third pulley 521 can also be provided as an auto-align pulley. Thereby, the third pulley 521 can be fixed to a portion of the housing of the wire saw device 600 with a pulley adjusting bearing 360. As a further additional modification, a counterweight 364 can be provided and supported by a counterweight support 362 such that the counterweight rotates together with the pulley 521 and the pulley is balanced with respect to the rotation axis.

This can be seen in its schematic side view shown in FIG. 6B. Therein, the second pulley 520 and the third pulley 521 are shown. The wire 213 is shown to be guided in a groove of the respective pulley. The second pulley is connected to pulley support members 524 and 525, which can be moved by a pulley moving device in a linear direction as indicated by the arrow.

According to different embodiments, the second pulley 520 and the third pulley 521 each have a counterweight 364 which is connected to the pulley support by counterweight support 362. Arrows 660 indicate the ability to rotate for automatic aligning of the second pulley 520 and the third pulley 521.

This can be better understood while referring to FIG. 6C. As indicated by the pulley support 524 having moved towards the left as compared to FIG. 6B, the second pulley 520 and the third pulley 521 are each inclined such that the wire 213 is guided perpendicularly to their respective pulley rotation axis. Accordingly, the pulley rotation axis is also rotated when the pulleys rotate in order to automatically align to the wire guiding direction.

Within the embodiments shown in FIGS. 6A, 6B and 6C, the wire 213 or the tension of the wire 213, respectively, is used to rotate the pulleys for automatic aligning with regard to the wire guiding direction. According to yet further embodiments, as shown in FIG. 7, the second pulley 520 and the third pulley 521 can be further connected with an alignment connection 770 such as a rod, a beam, or the like. FIG. 7 shows the situation for which the second pulley 520 (and the first pulley 220 in FIG. 6A) are moved towards the right hand side as compared to FIG. 6C. Thereby, the second pulley 520 and the third pulley 521 are rotated around the axis of a pulley adjusting bearing with respect to the respective pulley supports. The alignment connection 770, which can be provided according to some embodiments described herein, forces the second pulley 520 and the third pulley 521 to automatically align in a corresponding manner. Thus, if the second pulley 520 automatically aligns, the third pulley 521 follows the alignment without requiring an alignment force of the wire 213.

Embodiments described herein show a pulley moving device, which is adapted to track the position of a wire along an axis of the spool. Further, some embodiments show one or more auto-alignment pulleys. Thereby, unwanted forces on the wire can be reduced or eliminated. Further, oscillation within a wire saw device by repeatedly varying angles of the wire entering the first pulley can be reduced. Additionally, the risk of wire breakage can be reduced, e.g. by avoiding a roller which can result in wire breakage due to the inertia of the roller during a fast deceleration of the wire management system. Accordingly, a deceleration rate, e.g., during a stop of the wire saw device may be from 3-4 m/s2 to about 8 m/s2 or more, e.g. 13m/s2. Thereby it should be noted that a fast reduction of speed of the wire saw is critical to save the workpiece during an emergency stop or the like.

The pulley adjusting bearings allowing for a rotation of the pulleys perpendicular to the pulley rotation axis further reduces twisting of the wire. This might be particularly useful if thin wires or wires with a coating, e.g. a diamond coating, are used. Accordingly, according to embodiments, which can be combined other embodiments described herein, the wire management units and wire saw devices described herein are adapted for thin wires having a diameter of 120 µm or below such as, for example 100 µm or even 80 µm. Further the wire management units and wire saw devices described herein are adapted for coated wires, for example a wire having a nickel coating with diamond particles embedded therein. Such wires may typically have a diameter of 130 µm to 160 µm, e.g. 140 µm to 150 µm. For those wires a twisting of the wire might result in breaking of the coating. This can be reduced or prevented by tracking the wire position along a spool axis direction and/or providing pulleys which automatically align such that the wire is guided in a direction perpendicular to the pulley rotation axis.

According to different embodiments, which can be combined with other embodiments described herein, if an auto-align pulley is provided for the first pulley having a wire position detection unit, the wire position detection unit should be connected to the pulley or the support member for the pulley such that the wire position detection unit follows the alignment rotation of the pulley. This can improve the detection precision of the wire position while tracking the wire along the axis of the spool.

As described above, according to some embodiments, a controller can be used to be connected with the wire position detection unit. Thereby, the controller controls the pulley moving device. According to some embodiments, which can be combined with other embodiments described herein, the controller can have a CPU and memory such that a self-learning process for tracking the wire position can be implemented. Thus, a spool-pitch teach-in capability can be provided for some embodiments.

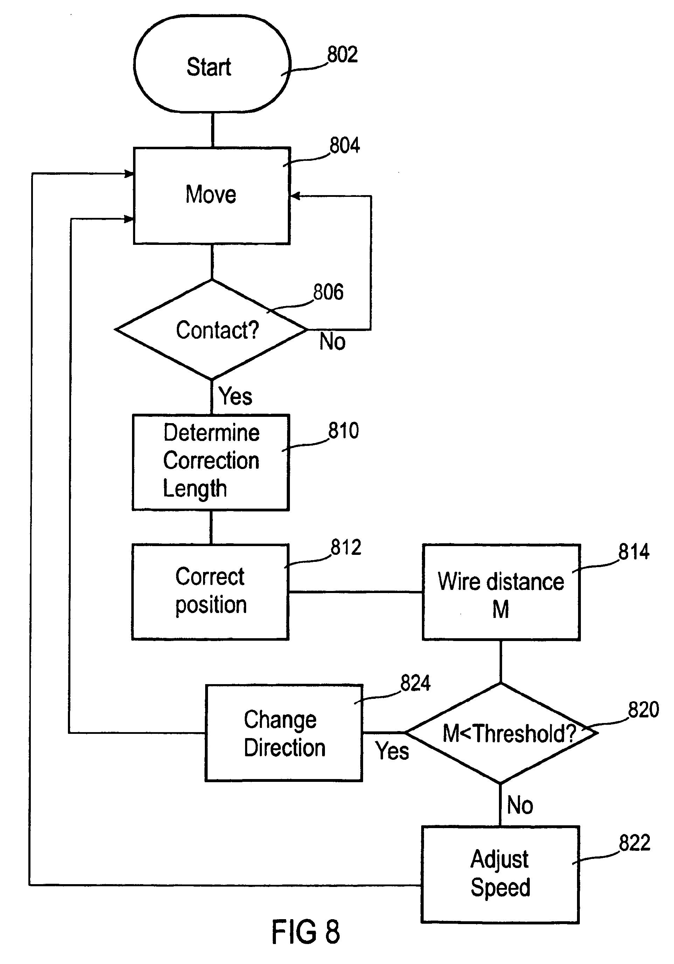

Such embodiments can be better understood with respect to FIG. 8. As illustrated in FIG. 8, the wire tracking of the wire position along the axis of the spool starts in step 802. In step 804, the pulley moving device moves in a direction, which is essentially parallel to the spool rotation axis (in a bi-directional mode). The control unit monitors whether the wire is in contact with one of the electrodes in step 806. For ease of reference, FIG. 8 describes only one electrode contact. However, it is to be understood that the contact of the first electrode on one side of the wire and the contact of the second electrode on the other side of the wire will each be monitored and used for wire tracking in the corresponding direction. According to yet even further embodiments, wherein other wire position detection units are used, step 806 might also monitor the wire position or whether the wire is in proximity to a corresponding sensor.

If there is no detection of a misalignment event of the wire tracking system (contact to electrode = NO) the tracking system follows the wire position by moving the pulley moving unit along the spool axis according to step 804. If a contact or incorrect position is detected in step 806 the length for correcting the position is determined in step 810. This can for example be done by taking into account the angle, which is known by the geometry of the wire path, under which the wire touches one of the electrodes. According to yet further embodiments, the number of layers of wire on the spool, i.e. the thickness of the wire carrying area on the spool can be taken into account to determine the distance of correction for the wire tracking system. In step 812 the wire tracking system moves to the correct position by moving the pulley moving unit to the correct position. In step 814 the length M of wire that has been unwound from the spool between previous misalignment event, for example touching of an electrode, and the present misalignment event is determined. The length of wire can for example be determined by the number of rotations of the spool and the radius of the wire on the wire carrying area of the spool. Based on the wire length between misalignment events, the controller learns the characteristic of the unwinding process. Therefore, for example, the wire amount corresponding to a misalignment detection can be safe in the memory of the controller.

Accordingly, if the wire amount M between two misalignment events is comparably large, the system determines that only a small correction needs to be implemented. If however, the wire amount M between two misalignment events is comparably short, it is determined that the characteristics of unwinding the wire from the spool is not yet properly learned.

Accordingly, in step 820 the wire amount M between subsequence misalignment events is compared to a threshold value. If the wire length M is equal or larger than a threshold value the speed of the movement of the pulley moving the device is adjusted in step 822 and the tracking system continues to follow the unwinding process by moving the pulley along the direction of the spool axis. The amount of adjustment of the speed for moving the pulley is thereby based on the frequency of occurrence of misalignment events, i.e. the length of wire unwound between misalignment events, between the previous misalignment event and the present misalignment event. Thus, the correct speed for moving the pulley is adjusted in real time by changing the speed of the pulley moving device only by the desired value.

The system can use a teach-in logic that after a few unwinding cycle the travel unit speed matches the winding pitch of the spool and the rotating speed of the spool, which varies with the amount of wire left on the spool in order to keep the linear speed of the wire constant.

When the wire is unwound from the spool at a flange of the spool or an end of the wire carrying area, respectively, the winding of the wire on the spool might not be fully predictable.

Accordingly, a sequence of misalignment events, for example a wire contacting an electrode, can occur in a relatively short time period or for a relatively short amount of wire being unwound. Thus, if the amount of wire between the previous misalignment event and the present misalignment event is below a certain threshold value, the tracking system determines that the moving direction of the pulley moving device needs to be changed in step 824 and the pulley is moved subsequently in the other direction in step 804.

According to yet further embodiments, it might be possible that after a change of direction the following detection of a misalignment event might be ignored since the system determines that a misalignment event can occur more frequently at the flange of the spool. That is, a misalignment event does not necessarily need an adaptation of the tracking process.

According to another embodiment, which can be combined with other embodiments described herein, the pulley moving device moves the pulley along the direction of the rotation axis of the spool over a length which does not fully correspond to the length of the wire carrying area on the spool (flange to flange). Accordingly the system, which has learned the length of the wire carrying area on the spool, might change the direction about 1 mm to 7mm, typically 3 mm to 4 mm before the pulley moving device reaches the turning point for changing direction of movement of the pulley. Thereby, it is possible (not shown in FIG. 8) that the moving direction is changed without a misalignment detection event. Thus, according to some embodiments, the length along which the pulley follows the rotation axis of the spool might be at least 90% of the length of the wire carrying area.

According to yet further embodiments, a change of direction might also be determined by detecting the misalignment event twice on the same side of the wire, for example on the same electrode. Accordingly, there is a plurality of options to detect and change the direction of movement of the pulley. Typically, the memory of the controller can be used to save the misalignment event history such that a learning process for tracking the wire can be conducted.

In light of the above, a plurality of embodiments are described herein, some of which are as follows. According to one embodiment, a wire management unit adapted for a wire saw device having a wire forming a wire web for cutting is described, the wire management unit includes a pulley moving device; at least one pulley for redirecting the wire and adapted for guiding the wire to the wire web, wherein the at least one pulley is connected to the pulley moving device and is adapted to rotate around a pulley axis; a spool for providing a wire towards the wire web during unwinding of the wire from the spool, wherein the spool comprises a rotation axis and a wire carrying area with a length along the direction of the rotational axis; and wherein the pulley moving device is adapted to move the at least one pulley along the direction of the rotation axis. According to yet further embodiments, which can be combined with the above embodiment, the pulley moving device can be at least one element selected from the group of: a linear actuator, a linear motor, a pneumatic cylinder, and a motor with a worm drive; the unit may further include a wire position detection device for detecting the wire position along the direction of the rotation axis, for example, such that the wire position detection device can be connected to a controller, and wherein the controller can be connected to the pulley moving device for controlling the pulley position along the direction of the rotation axis; and/or such that the wire position detection device can include a first electrode adapted to be biased to a first potential different from a potential of the wire, and a second electrode adapted to be biased to a second potential different from the potential of the wire, and wherein the first electrode and the second electrode can be spaced apart in a direction along the rotation axis for guiding the wire between the first electrode and the second electrode.

According to yet even further embodiments, one or more of the following implementation can alternatively or additionally be realized: the at least one pulley can be connected to the pulley moving device with a support rod, and a first pulley adjusting rotation bearing can be provided between a first portion of the support rod and a second portion of the support rod, the first pulley adjusting rotation bearing can have a pulley adjusting rotation axis which is perpendicular to the pulley axis; and which may, in particular, further include a pulley adjusting rotation bearing rotation prevention element adapted for temporarily locking a rotation of the pulley adjusting rotation bearing; the at least one pulley can be at least three pulleys, wherein a first pulley receives the wire from the spool, wherein a second pulley receives the wire from the first pulley, wherein a third pulley receives the wire from the second pulley, and wherein the first and the second pulley is connected to the pulley moving device; one or more of the group consisting of: the first pulley, the second pulley and the third pulley, can be connected to a corresponding pulley adjusting rotation bearing, i.e., a first pulley adjusting rotation bearing, a second pulley adjusting rotation bearing or a third pulley adjusting rotation bearing, respectively, and wherein corresponding pulley adjusting rotation bearing can have a corresponding pulley adjusting rotation axis which is perpendicular to the corresponding pulley axis; the wire management unit may further include a corresponding counterweight for each of the pulleys having a corresponding pulley adjusting rotation bearing; the pulley moving device can be adapted to move the pulley in direction of the rotation axis along a moving distance of at least 90% of the length of the wire carrying area; and/or the wire position detection device can be a contactless wire position detection device.

According to yet further embodiments, which can be combined with other embodiments described herein, a wire saw device is provided, wherein the wire saw device includes a wire management unit according to any of the embodiments describe herein. For example, the wire saw device can be an element selected from the group consisting of: a wire saw, a multiple wire saw, a squarer, and a cropper.

According to a yet further embodiment, a method of tracking a wire position in a wire saw device having a wire forming a wire web for cutting is provided. The method includes unwinding the wire from a spool having a rotation axis and a wire carrying area with a length along the direction of the rotational axis; and moving at least one pulley along the direction of the rotation axis. According to optional modifications thereof, the method can further include detecting the position of the wire along the direction of the rotation axis with a first electrode and a second electrode, wherein the detecting includes: identifying a contact of the wire with the first or the second electrode. The method can further include: determining a correction length along the direction of the rotation axis; moving the at least one pulley to a corrected position by means of the correction length; and determining a corrected moving speed for the moving of the at least one pulley based on the time period between the contact and a previous contact.

While the foregoing is directed to embodiments of the invention, other and further embodiments of the invention may be devised without departing from the basic scope thereof, and the scope thereof is determined by the claims that follow.

## Claims

1. A wire management unit adapted for a wire saw device (200; 300; 400; 500) having a wire (213) forming a wire web for cutting, the wire management unit comprising:
a pulley moving device (240; 440);
at least one pulley (220; 520) for redirecting the wire and adapted for guiding the wire to the wire web, wherein the at least one pulley is connected to the pulley moving device and is adapted to rotate around a pulley axis (222; 522);
a spool (212) for providing a wire towards the wire web during unwinding of the wire from the spool, wherein the spool comprises a rotation axis (212a) and a wire carrying area (213a) with a length along the direction of the rotational axis;
wherein the pulley moving device is adapted to move the at least one pulley along the direction of the rotation axis (212a); and
wherein the at least one pulley is connected to the pulley moving device (240; 440) with a support rod (224; 324; 524, 525) and a first pulley adjusting rotation bearing (360) is provided between a first portion (324) of the support rod and a second portion (326) of the support rod, the first pulley adjusting rotation bearing having a pulley adjusting rotation axis which is perpendicular to the pulley axis, wherein a pulley adjusting rotation bearing rotation prevention element (366) is provided, adapted for temporarily locking a rotation of the pulley adjusting rotation bearing.

2. The wire management unit according to claim 1, wherein the pulley moving device (240; 440) is at least one element selected from the group of: a linear actuator, a linear motor, a pneumatic cylinder, and a motor with a worm drive

3. The wire management unit according to any of claims 1 to 2, further comprising:
a wire position detection device (230; 330a; 330b) for detecting the wire position along the direction of the rotation axis.

4. The wire management unit according to claim 3, wherein the wire position detection device is connected to a controller (350), and wherein the controller is connected to the pulley moving device for controlling the pulley position along the direction of the rotation axis.

5. The wire management unit according to any of claims 3 to 4, wherein the wire position detection device comprises a first electrode (330a) adapted to be biased to a first potential different from a potential of the wire, and a second electrode (330b) adapted to be biased to a second potential different from the potential of the wire, and wherein the first electrode and the second electrode are spaced apart in a direction along the rotation axis for guiding the wire (213) between the first electrode and the second electrode.

6. The wire management unit according to any of claims 1 to 5, wherein the at least one pulley are at least three pulleys, wherein a first pulley (220) receives the wire from the spool, wherein a second pulley (520) receives the wire from the first pulley, wherein a third pulley (521) receives the wire from the second pulley, and wherein the first and the second pulley is connected to the pulley moving device (240; 440).

7. The wire management unit according to claim 6, wherein one or more of the group consisting of: the first pulley (220), the second pulley (520) and the third pulley (521), is connected to a corresponding pulley adjusting rotation bearing (360), i.e., a first pulley adjusting rotation bearing, a second pulley adjusting rotation bearing or a third pulley adjusting rotation bearing, respectively, and wherein corresponding pulley adjusting rotation bearing has a corresponding pulley adjusting rotation axis which is perpendicular to the corresponding pulley axis.

8. The wire management unit according to claim 7, further comprising a corresponding counterweight (364) for each of the pulleys having a corresponding pulley adjusting rotation bearing (360).

9. The wire management unit according to any of claims 1 to 8, wherein the pulley moving device (240; 440) is adapted to move the pulley (220; 520) in direction of the rotation axis along a moving distance of at least 90% of the length of the wire carrying area (213a).

10. The wire management unit according to any of claims 1 to 9, wherein the wire position detection device (230) is a contactless wire position detection device.

11. A wire saw device; comprising:
a wire management unit according to any of claims 1 to 10.

12. The wire saw device according to claim 11, wherein the wire saw device (200; 300; 400; 500) is an element selected from the group consisting of: a wire saw, a multiple wire saw, a squarer, and a cropper.

13. A method of tracking a wire position in a wire saw device (200; 300; 400; 500) having a wire (213) forming a wire web for cutting, comprising:
unwinding the wire (213) from a spool (212) having a rotation axis (212a) and a wire carrying area (213a) with a length along the direction of the rotational axis;
moving at least one pulley (240; 440) along the direction of the rotation axis;
connecting the at least one pulley to a pulley moving device (240; 440) with a support rod (224; 324; 524, 525);
providing a first pulley adjusting rotation bearing (360) between a first portion (324) of the support rod and a second portion (326) of the support rod, the first pulley adjusting rotation bearing having a pulley adjusting rotation axis which is perpendicular to the pulley axis; and,
providing a pulley adjusting rotation bearing rotation prevention element (366) adapted for temporarily locking a rotation of the pulley adjusting rotation bearing.

14. The method of tracking a wire position according to claim 13, further comprising:
detecting the position of the wire along the direction of the rotation axis with a first electrode (330a) and a second electrode (330b), wherein the detecting comprises:
identifying a contact of the wire (213) with the first or the second electrode;
the method further comprises:
determining a correction length along the direction of the rotation axis;
moving the at least one pulley (240; 440) to a corrected position by means of the correction length;
determining a corrected moving speed for the moving of the at least one pulley based on the time period between the contact and a previous contact.

## Patentansprüche

1. Drahtführungseinheit, die für eine Drahtsägenvorrichtung (200; 300; 400; 500) mit einem Draht (213) angepasst ist, der ein Drahtgitter zum Schneiden bildet, wobei die Drahtführungseinheit umfasst:
eine Führungsrollenbewegungsvorrichtung (240; 440);
mindestens eine Führungsrolle (220; 520) zum Umlenken des Drahts, und die dazu angepasst ist, den Draht zum Drahtgitter zu leiten, wobei die mindestens eine Führungsrolle an die Führungsrollenbewegungsvorrichtung angeschlossen und dazu angepasst ist, sich um eine Führungsrollenachse (222; 522) zu drehen;
eine Spule (212) zum Zuführen eines Drahts zum Drahtgitter, während der Draht von der Spule abgewickelt wird, wobei die Spule eine Drehachse (212a) und eine Drahttransportfläche (213a) mit einer Länge in der Richtung der Drehachse umfasst;
wobei die Führungsrollenbewegungsvorrichtung dazu angepasst ist, die mindestens eine Führungsrolle in der Richtung der Drehachse (212a) zu bewegen; und
wobei die mindestens eine Führungsrolle mit einer Tragestange (224; 324; 524, 525) an die Führungsrollenbewegungsvorrichtung (240; 440) angeschlossen und ein erstes Führungsrolleneinstelldrehlager (360) zwischen einem ersten Abschnitt (324) der Tragestange und einem zweiten Abschnitt (326) der Tragestange vorgesehen ist, wobei das erste Führungsrolleneinstelldrehlager eine Führungsrolleneinstellungsdrehachse hat, die senkrecht zur Führungsrollenachse ist, wobei ein Führungsrolleneinstelldrehlagerdrehverhinderungselement (366) vorgesehen ist, das dazu angepasst ist, eine Drehung des Führungsrolleneinstelldrehlagers temporär zu blockieren.

2. Drahtführungseinheit nach Anspruch 1, wobei es sich bei der Führungsrollenbewegungsvorrichtung (240; 440) um zumindest ein Element handelt, das aus der Gruppe ausgewählt ist, die besteht aus: einem Linearstellglied, einem Linearmotor, einem Pneumatikzylinder und einem Motor mit Schneckengetriebe.

3. Drahtführungseinheit nach jedem der Ansprüche 1 bis 2, darüber hinaus umfassend:
eine Drahtpositionserfassungsvorrichtung (230; 330a; 330b) zum Erfassen der Drahtposition entlang der Richtung der Drehachse.

4. Drahtführungseinheit nach Anspruch 3, wobei die Drahtpositionserfassungsvorrichtung an eine Regeleinheit (350) angeschlossen ist, und wobei die Regeleinheit an die Führungsrollenbewegungsvorrichtung angeschlossen ist, um die Führungsrollenposition in der Richtung der Drehachse zu regeln.

5. Drahtführungseinheit nach jedem der Ansprüche 3 bis 4, wobei die Drahtpositionserfassungsvorrichtung eine erste Elektrode (330a), die dazu angepasst ist, auf ein erstes Potential vorgespannt zu werden, das sich von einem Potential des Drahts unterscheidet, und eine zweite Elektrode (330b) umfasst, die dazu angepasst ist, auf ein zweites Potential vorgespannt zu werden, das sich vom Potential des Drahts unterscheidet, und wobei die erste Elektrode und die zweite Elektrode in einer Richtung entlang der Drehachse zum Leiten des Drahts (213) zwischen die erste Elektrode und die zweite Elektrode beabstandet sind.

6. Drahtführungseinheit nach jedem der Ansprüche 1 bis 5, wobei es sich bei der mindestens einen Führungsrolle um mindestens drei Führungsrollen handelt, wobei eine erste Führungsrolle (220) den Draht von der Spule her aufnimmt, wobei eine zweite Führungsrolle (520) den Draht von der ersten Führungsrolle her aufnimmt, wobei eine dritte Führungsrolle (521) den Draht von der zweiten Führungsrolle her aufnimmt, und wobei die erste und die zweite Führungsrolle an die Führungsrollenbewegungsvorrichtung (240; 440) angeschlossen sind.

7. Drahtführungseinheit nach Anspruch 6, wobei ein oder mehrere Element/e aus der Gruppe, die besteht aus: der ersten Führungsrolle (220), der zweiten Führungsrolle (520) und der dritten Führungsrolle (521) an ein entsprechendes Führungsrolleneinstelldrehlager (360), d.h. ein erstes Führungsrolleneinstelldrehlager, ein zweites Führungsrolleneinstelldrehlager bzw. ein drittes Führungsrolleneinstelldrehlager angeschlossen ist/sind, und wobei das entsprechende Führungsrolleneinstelldrehlager eine entsprechende Führungsrolleneinstelldrehachse hat, die senkrecht zur entsprechenden Führungsrollenachse ist.

8. Drahtführungseinheit nach Anspruch 7, darüber hinaus ein entsprechendes Gegengewicht (364) für jede der Führungsrollen mit einem entsprechenden Führungsrolleneinstelldrehlager (360) umfassend.

9. Drahtführungseinheit nach jedem der Ansprüche 1 bis 8, wobei die Führungsrollenbewegungsvorrichtung (240; 440) dazu angepasst ist, die Führungsrolle (220; 520) in der Richtung der Drehachse entlang einer Bewegungsstrecke von mindestens 90% der Länge der Drahttransportfläche (213a) zu bewegen.

10. Drahtführungseinheit nach jedem der Ansprüche 1 bis 9, wobei es sich bei der Drahtpositionserfassungsvorrichtung (230) um eine berührungslose Drahtpositionserfassungsvorrichtung handelt.

11. Drahtsägenvorrichtung, Folgendes umfassend:
eine Drahtführungseinheit nach jedem der Ansprüche 1 bis 10.

12. Drahtsägenvorrichtung nach Anspruch 11, wobei es sich bei der Drahtsägenvorrichtung (200; 300; 400; 500) um ein Element handelt, das aus der Gruppe ausgewählt ist, die besteht aus: einer Drahtsäge, einer Mehrdrahtsäge, einer Abkantsäge und einer Zuschnittsäge.

13. Verfahren zum Nachvollziehen einer Drahtposition in einer Drahtsägenvorrichtung (200; 300; 400; 500) mit einem Draht (213), der ein Drahtgitter zum Schneiden bildet, Folgendes umfassend:
Abwickeln des Drahts (213) von einer Spule (212), die über eine Drehachse (212a) und eine Drahttransportfläche (213a) mit einer Länge in der Richtung der Drehachse verfügt;
Bewegen mindestens einer Führungsrolle (240; 440) in der Richtung der Drehachse;
Anschließen der mindestens einen Führungsrolle an eine Führungsrollenbewegungsvorrichtung (240; 440) mit einer Tragestange (224; 324; 524, 525);
Bereitstellen eines ersten Führungsrolleneinstelldrehlagers (360) zwischen einem ersten Abschnitt (324) der Tragestange und einem zweiten Abschnitt (326) der Tragestange, wobei das erste Führungsrolleneinstelldrehlager eine Führungsrolleneinstelldrehachse hat, die senkrecht zur Führungsrollenachse ist, und
Bereitstellen eines Führungsrolleneinstelldrehlagerdrehverhinderungselements (366), das dazu angepasst ist, eine Drehung des Führungsrolleneinstelldrehlagers temporär zu blockieren.

14. Verfahren zum Nachvollziehen einer Drahtposition nach Anspruch 13, darüber hinaus umfassend: Erfassen der Position des Drahts entlang der Richtung der Drehachse mit einer ersten Elektrode (330a) und einer zweiten Elektrode (330b), wobei das Erfassen umfasst:
Identifizieren eines Kontakts des Drahts (213) mit der ersten oder der zweiten Elektrode;
wobei das Verfahren darüber hinaus umfasst:
Bestimmen einer Korrekturlänge in der Richtung der Drehachse;
Bewegen der mindestens einen Führungsrolle (240; 440) an eine korrigierte Position mittels der Korrekturlänge;
Bestimmen einer korrigierten Bewegungsgeschwindigkeit für das Bewegen der mindestens einen Führungsrolle auf Grundlage des Zeitraums zwischen dem Kontakt und einem vorhergehenden Kontakt.

## Revendications

1. Unité de gestion de fil adaptée à un dispositif de scie à fil (200 ; 300 ; 400 ; 500) comportant un fil (213) formant une grille de fils pour découpe, l'unité de gestion de fil comprenant :
un dispositif de déplacement de poulie (240 ; 440) ;
au moins une poulie (220 ; 520) destinée à réorienter le fil et apte à guider le fil vers la grille de fils, l'au moins une poulie étant reliée au dispositif de déplacement de poulie et apte à tourner autour d'un axe de poulie (222; 522) ;
une bobine (212) destinée à délivrer un fil vers la grille de fils lors du déroulage du fil à partir de la bobine, la bobine comprenant un axe de rotation (212a) et une zone de support de fil (213a) avec une longueur le long de la direction de l'axe de rotation ;
le dispositif de déplacement de poulie étant apte à déplacer l'au moins une poulie le long de la direction de l'axe de rotation (212a) ; et
l'au moins une poulie étant reliée au dispositif de déplacement de poulie (240 ; 440) via une tige de support (224 ; 324 ; 524 ; 525) et un premier palier de rotation de réglage de poulie (360) étant fourni entre une première partie (324) de la tige de support et une deuxième partie (326) de la tige de support, le premier palier de rotation de réglage de poulie comportant un axe de rotation de réglage de poulie qui est perpendiculaire à l'axe de poulie, un élément anti-rotation de palier de rotation de réglage de poulie (366) étant fourni, apte à bloquer temporairement une rotation du palier de rotation de réglage de poulie.

2. L'unité de gestion de fil selon la revendication 1, dans laquelle le dispositif de déplacement de poulie (240 ; 440) est au moins un élément sélectionné dans le groupe de : un actionneur linéaire, un moteur linéaire, un vérin pneumatique, et un moteur à entraînement par vis sans fin.

3. L'unité de gestion de fil selon l'une quelconque des revendications 1 à 2, comprenant en outre :
un dispositif de détection de position de fil (230 ; 330a ; 330b) destiné à détecter la position de fil le long de la direction de l'axe de rotation.

4. L'unité de gestion de fil selon la revendication 3, dans laquelle le dispositif de détection de position de fil est relié à une unité de commande (350), et dans laquelle l'unité de commande est reliée au dispositif de déplacement de poulie pour commander la position de poulie le long de la direction de l'axe de rotation.

5. L'unité de gestion de fil selon l'une quelconque des revendications 3 à 4, dans laquelle le dispositif de détection de position de fil comprend une première électrode (330a) apte à être polarisée à un premier potentiel différent d'un potentiel du fil, et une deuxième électrode (330b) apte à être polarisée à un deuxième potentiel différent du potentiel du fil, et dans laquelle la première électrode et la deuxième électrode sont espacées l'une de l'autre dans une direction le long de l'axe de rotation afin de guider le fil (213) entre la première électrode et la deuxième électrode.

6. L'unité de gestion de fil selon l'une quelconque des revendications 1 à 5, dans laquelle l'au moins une poulie est constituée par au moins trois poulies, une première poulie (220) recevant le fil depuis la bobine, une deuxième poulie (520) recevant le fil depuis la première poulie, une troisième poulie (521) recevant le fil depuis la deuxième poulie, et la première et la deuxième poulie étant reliées au dispositif de déplacement de poulie (240 ; 440).

7. L'unité de gestion de fil selon la revendication 6, dans laquelle un ou plusieurs éléments du groupe constitué par : la première poulie (220), la deuxième poulie (520) et la troisième poulie (521), est relié à un palier de rotation de réglage de poulie correspondant (360), c.-à-d. un premier palier de rotation de réglage de poulie, un deuxième palier de rotation de réglage de poulie ou un troisième palier de rotation de réglage de poulie, respectivement, et le palier de rotation de réglage de poulie correspondant comportant un axe de rotation de réglage de poulie correspondant qui est perpendiculaire à l'axe de poulie correspondant.

8. L'unité de gestion de fil selon la revendication 7, comprenant en outre un contrepoids correspondant (364) pour chacune des poulies comprenant un palier de rotation de réglage de poulie correspondant (360).

9. L'unité de gestion de fil selon l'une quelconque des revendications 1 à 8, dans laquelle le dispositif de déplacement de poulie (240 ; 440) est apte à déplacer la poulie (220 ; 520) en direction de l'axe de rotation le long d'une distance de déplacement d'au moins 90 % de la longueur de la zone de support de fil (213a).

10. L'unité de gestion de fil selon l'une quelconque des revendications 1 à 9, dans laquelle le dispositif de détection de position de fil (230) est un dispositif de détection de position de fil sans contact.

11. Dispositif de scie à fil, comprenant :
une unité de gestion de fil selon l'une quelconque des revendications 1 à 10.

12. Le dispositif de scie à fil selon la revendication 11, dans lequel le dispositif de scie à fil (200 ; 300 ; 400 ; 500) est un élément sélectionné dans le groupe constitué par: une scie à fil, une scie à fil multiple, une équarrisseuse et une élagueuse.

13. Procédé de suivi d'une position de fil dans un dispositif de scie à fil (200 ; 300 ; 400 ; 500) comportant un fil (213) formant une grille de fils pour découpe, comprenant :
le déroulage du fil (213) depuis une bobine (212) comportant un axe de rotation (212a) et une zone de support de fil (213a) avec une longueur le long de la direction de l'axe de rotation ;
le déplacement d'au moins une poulie (240 ; 440) le long de la direction de l'axe de rotation ;
la liaison de l'au moins une poulie à un dispositif de déplacement de poulie (240 ; 440) via une tige de support (224 ; 324 ; 524 ; 525) ;
la fourniture d'un premier palier de rotation de réglage de poulie (360) entre une première partie (324) de la tige de support et une deuxième partie (326) de la tige de support, le premier palier de rotation de réglage de poulie comportant un axe de rotation de réglage de poulie qui est perpendiculaire à l'axe de poulie ; et,
la fourniture d'un élément anti-rotation de palier de rotation de réglage de poulie (366) apte à bloquer temporairement une rotation du palier de rotation de réglage de poulie.

14. Le procédé de suivi d'une position de fil selon la revendication 13, comprenant en outre :
la détection de la position du fil le long de la direction de l'axe de rotation avec une première électrode (330a) et une deuxième électrode (330b), la détection comprenant :
l'identification d'un contact du fil (213) avec la première ou la deuxième électrode ;
le procédé comprend en outre :
la détermination d'une longueur de correction le long de la direction de l'axe de rotation ;
le déplacement de l'au moins une poulie (240 ; 440) vers une position corrigée moyennant la longueur de correction ;
la détermination d'une vitesse de déplacement corrigée pour le déplacement de l'au moins une poulie sur la base de la période de temps entre le contact et un contact précédent.
